# EUROPEAN PATENT SPECIFICATION

(11) **EP 3 602 715 B1**
(45) Date of publication and mention of the grant of the patent: **26.11.2025**
(21) Application number: 17715663.5
(22) Date of filing: 31.03.2017
(51) Int. Cl.: H02J 3/00, H02J 13/00

(54) **SYSTEM, METHOD AND A COMPUTER PROGRAM PRODUCT FOR AN IMPROVED FAULT ANALYSIS IN AN ELECTRICAL POWER SYSTEM**
SYSTEM, VERFAHREN UND COMPUTERPROGRAMMPRODUKT ZUR VERBESSERTEN FEHLERANALYSE IN EINEM ELEKTRISCHEN STROMVERSORGUNGSSYSTEM
SYSTÈME, PROCÉDÉ ET PRODUIT PROGRAMME D'ORDINATEUR D'ANALYSE DE DÉFAILLANCE AMÉLIORÉE D'UN SYSTÈME D'ALIMENTATION ÉLECTRIQUE

(43) Date of publication of application: 05.02.2020
(73) Proprietor: Siemens Aktiengesellschaft, 80333 München (DE)
(72) Inventor: KRISHNAN, Ganesh Ayyappan, Bangalore Karnataka 560071 (IN); RAJASEKARAN, Vijayaganesh, 560100 Bangalore (IN); A, Murugan, Bangalore Karnataka 560048 (IN)
(74) Representative: Patentanwaltskanzlei WILHELM & BECK
(86) International application number: PCT/EP2017/057721
(87) International publication number: WO 2018/177540

(56) References cited:
- WO-A2-2007/070255
- US-A1- 2006 235 574
- US-A1- 2007 239 373

## Description

The present invention relates to fault analysis in an electrical power system. Furthermore, the present invention relates to a method, a power network data analysis system, and a computer program product for analyzing power network data of an electrical power system.

A conventional electrical power generating facility supplies electrical power to consumers over a vast and expansive power distribution grid containing many interconnected power line networks. The power line networks are of various sizes and convey low, medium or high voltage electric power to the consumers. Power quality of the electric power conveyed is typically defined as the power network's ability to supply a clean and stable power supply to the loads connected thereto. In other words, power quality ideally provides a power supply that is always available, is noise-free, and is always within acceptable voltage and frequency tolerance limits. Moreover, power quality determines fitness quotient of the electrical power conveyed to consumer equipment. Without sufficient power quality, the consumer equipment may malfunction, fail prematurely or cease to operate. There are several causes for decrease in power quality, for example, a shared infrastructure among customers, harmonics arising due to integration of micro grids and/or distributed generation, etc.

Power quality issues largely include any deviation from normal operation of a voltage source. Power quality issues include high-speed events such as voltage impulses or transients, high frequency noise, voltage swells and sags, or a total power loss. Electrical equipments of various types, facing power quality issues are typically affected in different ways. By analyzing the electrical power and evaluating the electrical equipment or load of the electrical equipment, it can be determined whether a power quality issue exists or not. Thus, power quality issue could also be looked at as a compatibility problem of the electrical equipment connected to the grid, that is, the electrical equipment's compatibility with events happening on the grid. Such problems are typically resolved by improving the power quality or making the equipment tougher. However, making equipment tougher often results in an increased cost of the equipment. Therefore, addressing the power quality issues is a preferred alternative not only from point of view of equipment life but also from point of view of an overall health of the grid.

In order to maintain acceptable levels of power quality and system reliability, analysis of faults and power quality issues based on the events is performed. However such analysis typically involves scrutinizing humungous data recorded by intelligent electronic devices (IEDs) placed in various substations. Such data is typically analyzed by power engineers via multiple tools in order to establish correlation between an event and a failure of equipment. Conventional power quality analysis tools automatically read disturbance files and record the power quality data captured by IEDs via periodic polling of the IEDs. However, the IEDs typically provide a large number of disturbance files per event, which the power engineers have to look into and identify appropriate disturbance files thereby making the analysis process tedious and time consuming.

Moreover, identification of an appropriate disturbance file for analysis is largely based on competency of the power engineers thereby leading to possibility of false conclusions in the analysis due to human errors. Furthermore, determining whether the power quality disturbance occurred first or a fault occurred first is a cumbersome process which requires substation wide analysis. Thus, conventional analysis of power quality lacks efficiency and fails to provide a full-proof and in depth analysis of the disturbances occurring on the grid.

Documents WO 2007 / 070 255 A2 and US 2006 / 0 235 574 A1 disclose disturbance detection in a grid based on frequency measurements within the grid.

Document US 2007 / 0 239 373 A1 discloses a system for a realtime power capacity assessment based on measured indicator values within a power distribution system.

It is an object of the present invention to provide a method, system and a computer program product for analyzing power network data of an electrical power system, with maximum accuracy in a time effective and a cost effective way.

The method, system and computer program product according to the present invention defined in the respective independent claims 1,9,11, achieve the aforementioned object by employing a power network data analysis logic for determining a cause of a power event that has occurred on the electrical power system. According to the present invention, a method of analyzing power network data of an electrical power system is provided. As used herein, "electrical power system" refers to a network of electrical components comprising, for example, power generation equipment, power distribution equipment, power network protection equipment such as circuit breakers, relays, disconnectors, switchgears, etc., connected via power lines for generation, transmission and distribution of power therewithin from a power generation facility to a power consumption facitiy. Also, used herein, "power network data" refers to data obtained in real time and/or in non-real time from geographically distinct points spread over a wide area of an electrical power system. According to a preferred embodiment of the present invention, the power network data is substation wide power network data. According to an embodiment of the present invention, the power network data is a time stamped data comprising, for example, phasor measurements of data streams collected from various geographically distinct points. In a preferred embodiment according to the present invention, the power network data is a measured data and/or a computed data obtained from a plurality of power system data sources comprising, for example, control areas, protection devices, transmission facilities, utilities, regional reliability control centers, EMS/SCADA systems, non-power grid data sources, etc. According to a preferred embodiment of the present invention, the power network data is stored in a power system database. The power network data may be obtained periodically or continuously.

The power network data comprises power quality data, protection device data associated with a plurality of protection devices in the electrical power system, power event data, and topology data. As used herein, "power quality data" refers to data measured by the power quality devices in the electrical power system. The power quality data comprises, for example, harmonic distortion, flicker, unbalance voltage, individual harmonics, individual voltage and current values, etc., of a feeder. As used herein, "protection device data" refers to configuration data associated with the protection devices, for example, threshold value settings such as a trip level for a protection relay. As used herein, "power event data" refers to data associated with a power network event, for example, a time of occurrence of the power event, a sequence of occurrences of a plurality of power events, etc. The power events comprise deviation from a standard steady state operation that are significant from a fault analysis perspective and comprise, for example, load variations, power quality variations, faults such as short circuit faults, phase faults, earth faults, etc. As used herein, "topology data" refers to data associated with one or more substations in the electrical power system. The topology data comprises, for example, details of the electrical components such as power lines, buses, circuit breakers, switches, relays, transformers, as well as the loads such as motors, drives, capacitors, panelboards, etc., that enable to monitor load variation of the electrical power system. The topology data is monitored continuously and is obtained, for example, from configuration files, bay controller units, etc.

The method, according to the present invention, comprises obtaining the power network data representing one or more parameters of electrical power being carried on the electrical power system. The parameters comprising, for example, voltage and current values measured, for example, by various electrical measurement or sensing devices, at various points in the electrical power system. The parameters are related to, for example, quality of the electrical power, data associated with various electrical components supporting the electrical power being carried, data associated with the load being supplied, etc. The parameters comprise, for example, voltage, current, power, phase angles, frequency, harmonics, linear and nonlinear load values, etc., and may be measured and/or computed for each feeder and/or for each electrical component connected in the electrical power system.

The method, according to the present invention, comprises detecting a power event on the electrical power system from the power network data. The power event comprises a momentary event occurring on the electrical power system. As used herein "momentary event" refers to an abrupt deviation from a steady state operation that occurs for a short time period such as momentary overvoltage, a transient fault, etc. The power event is detected by defining a threshold limit for a plurality of power network data values obtained. For example, if a root-mean-square (RMS) current in one or more phases on an electrical power system exceeds a predetermined threshold level, this could indicate presence of a fault current which exceeds normal system load thereby qualifying as a power event. Other types of thresholds comprise, for example, a limit on allowable deviation of a measured quantity from its estimated nominal value, matching observed data to templates representative of certain kinds of failures or incipient failures. In a preferred embodiment, according to the present invention, the power event data is data associated with the power event, which is measured or computed, before and after occurrence of the power event for predefined time duration. Since the method, according to the present invention, precludes manual analysis of power network data, advantageously, the predefined time duration can be set in such way so as to capture and detect each of the momentary events.

The method, according to the present invention, comprises determining a cause of the power event based on the power network data. The cause of the power event comprises a load variation or a fault occurrence in the electrical power system. The cause of the power event is determined by employing power network data analysis logic. The power network data analysis logic comprises determining a type of the power event based on power quality data and protection device data obtained from the power network data. The type of the power event comprises a fault indication in the electrical power system and/or an aberration in quality of the electrical power being carried in the electrical power system. In order to determine, the type of the power event, a time of occurrence of the power event is obtained from the power event data. Using the time of occurrence of the power event, the power quality data and the protection device data, associated with the time of occurrence of the power event, is extracted from the power system database storing the power network data. Using the extracted power quality data and the protection device data, the type of the power event is determined. For example, on occurrence of a voltage swell or a voltage sag observed from the power quality data and on tripping of a protection device observed from the protection device data, a type of the power event is identified to be a combination type power event, which is, fault indication and aberration in power quality.

The power network data analysis logic comprises identifying a location of the power event based on the power quality data. The location of the power event comprises a load side power event and/or a source side power event. In order to identify, the location of the power event, voltage and current values are obtained from the power quality data. Based on the changes in the voltage and current, for example, when voltage dips and current increases at same instant or voltage increases and current dips at the same instant, then the power event is identified to be a load side power event. Whereas, if the voltage and the current both dip at the same instant then the power event is identified to be a source side power event.

The power network data analysis logic comprises analyzing the power event based on the power network data, the type of power event, and/or the location of the power event. The analysis of the power event comprises determining a cause of the power event, that is, a load variation or a fault occurrence in the electrical power system. In order to analyze the power event, the power quality data, the power event data, the protection device data and the topology data are extracted from the power network data. For example, for a combination type of the power event comprising a fault indication and a power quality aberration, a time of occurrence of each type of the power events is obtained from the power event data and a sequence of occurrence of each type of the power events is computed. If the aberration in power quality is found to be occurring before the fault indication, then using the power quality data and the topology data as well as the type of the power event, for example, a load side power event, a cause of the power event is determined. In an embodiment, the protection device data is also analyzed post analyzing the power quality data to determine cause of the power event. If the fault indication is found to occur before the power quality aberration, then using the protection device data and the topology data along with the type of the power event, a cause of the power event is determined. In an embodiment, the power quality data is analyzed after analyzing the protection device data to determine cause of the power event.

The method, according to the present invention, comprises generating a recommendation associated with the power event for the electrical power system based on the cause of the power event. The recommendation comprises one or more of a health status indication of one or more parts of the electrical power system, a replacement indication of one or more parts of the electrical power system, and a calibration indication of one or more parts of the electrical power system. As used herein, "health status" refers to an overall state of operational accuracy of a part of the electrical power system. The health status comprises, for example, whether an electrical component such as a protection device is operating as per its normal operating state, whether it has failed, whether it has had a malfunction, or whether its availability is affected or is expected to be affected following a power quality event or due to its aging factor. The health status is determined based on the cause of the power event and may include time of first observance and severity of any kind of error or contingency of the protection device. For an example, when a total harmonic distortion for a feeder has increased and the type of power event is a power quality aberration only then the health status may indicate a preventive warning about a circuit breaker in the feeder that could potentially trip. Advantageously, the health status is generated based on number of times a power event has occurred in a particular section of the electrical power system, that is, if a power event has happened for a number of times beyond a predefined threshold limit set for a particular feeder then the health status is generated indicating a preventive warning. The recommendation may further comprise a replacement indication for a part of the electrical power system if the health status of the part has been affected for a specific duration of time. The recommendation may further comprise calibration indication for a part such as a sensor, if the health status of the part comprises malfunction indication.

According to the present invention, also disclosed herein is a power network data analysis system for analyzing power network data of an electrical power system. The power network data analysis system comprises a non-transitory computer readable storage medium storing computer program instructions defined by modules of the power network data analysis system and at least one processor communicatively coupled to the non-transitory computer readable storage medium, executing the defined computer program instructions. The modules of the power network data analysis system comprise a data obtaining module, an event detection module, a cause determination module, and a recommendation generation module. The data obtaining module is configured to obtain the power network data representing one or more parameters of electrical power being carried on the electrical power system. The event detection module module is configured to detect a power event on the electrical power system from the power network data. The cause determination module is configured to determine a cause of the power event based on the power network data. The recommendation generation module is configured to generate a recommendation associated with the power event for the electrical power system based on the cause of the power event.

The cause determination module comprises modules configured to employ power network data analysis logic. The modules of the cause determination module comprise a type determination module configured to determine a type of the power event based on power quality data and protection device data obtained from the power network data, a location identification module configured to identify a location of the power event based on the power quality data, and an event analysis module configured to analyze the power event based on one or more of the power network data, the type of the power event, and the location of the power event.

According to the present invention, also disclosed herein, is a computer program product comprising a non-transitory computer readable storage medium storing computer program codes that comprise instructions executable by at least one processor for performing the method of analyzing power network data of an electrical power system, disclosed above.

The above-mentioned and other features of the invention will now be addressed with reference to the accompanying drawings of the present invention. The illustrated embodiments are intended to illustrate, but not limit the invention. Indeed, the invention is solely defined and limited by the features of the independent claims. Preferred embodiments are defined in the dependent claims.

The present invention is further described hereinafter with reference to illustrated embodiments shown in the accompanying drawings, in which:
- FIGS 1A-1D: are process flowcharts illustrating a method of analyzing power network data of an electrical power system.
- FIG 2: illustrates a power network data analysis system for analyzing power network data of an electrical power system.
- FIG 3: is a block diagram illustrating architecture of a computer system employed by the power network data analysis system illustrated in FIG 2 for analyzing power network data of an electrical power system.
- FIGS 4A-4B: illustrate an electrical power system comprising linear and nonlinear loads.
- FIGS 5A-5B: illustrate graphical waveforms during operation of a protection device in the electrical power system illustrated in FIGS 4A-4B.
- FIGS 6-7: illustrate screenshots of a graphical user interface provided by the power network data analysis system illustrated in FIG 2, for rendering recommendations generated by the power network data analysis system based on a cause of occurrence of a power event in the electrical power system illustrated in FIGS 4A-4B.

Various embodiments are described with reference to the drawings, wherein like reference numerals are used to refer to like elements throughout. In the following description, for the purpose of explanation, numerous specific details are set forth in order to provide thorough understanding of one or more embodiments of the present invention. It may be evident that such embodiments may be practiced without these specific details.

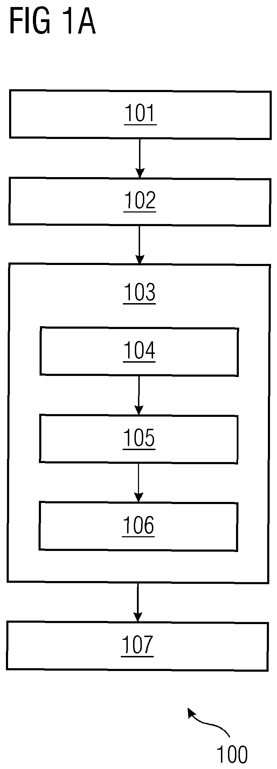

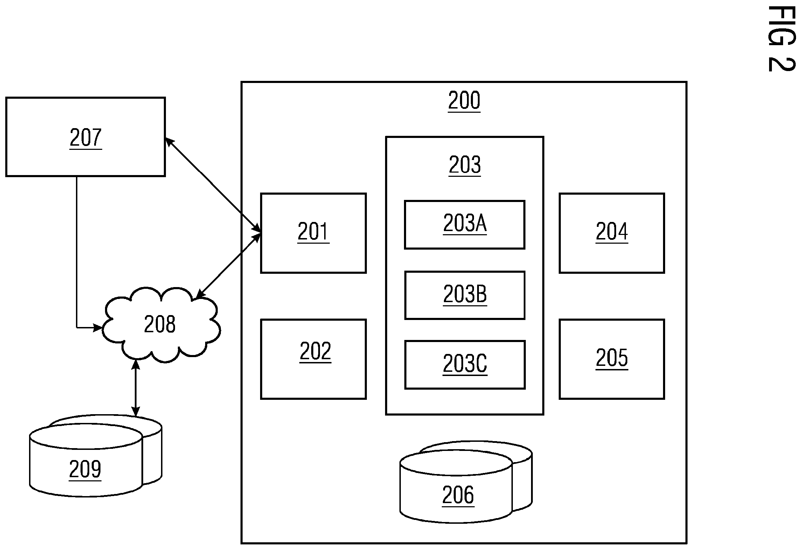

FIGS 1A-1D are process flowcharts illustrating a method 100 of analyzing power network data of an electrical power system. In a preferred embodiment, according to the present invention, the method disclosed herein employs a power network data analysis system illustrated in FIG 2, comprising at least one processor configured to execute computer program instructions for analyzing power network data of an electrical power system. As illustrated in FIG 1A, the step 101 of the method disclosed herein comprises obtaining the power network data representing one or more parameters of electrical power being carried on the electrical power system. The power network data comprises power quality data, protection device data associated with a plurality of protection devices in the electrical power system, power event data, and topology data. The power network data is a measured data and/or a computed data. The power network data is substation wide power network data. The power network data is obtained, for example, from each of the feeders of a substation via various sensing and measurement devices coupled to the feeders, such as, transducers, surge protection devices, fault sensing devices, power analyzers, etc. The power network data is stored in a power system database.

The step 102 of the method disclosed herein, comprises detecting a power event on the electrical power system from the power network data. The power event comprises a momentary event occurring on the electrical power system. For detection of the power event, the power network data is periodically screened through and any deviation of any of the parameters from their steady state operation is detected to be a power event. The power events are also stored in the power system database along with the power network data obtained during the time period in which the power event has occurred.

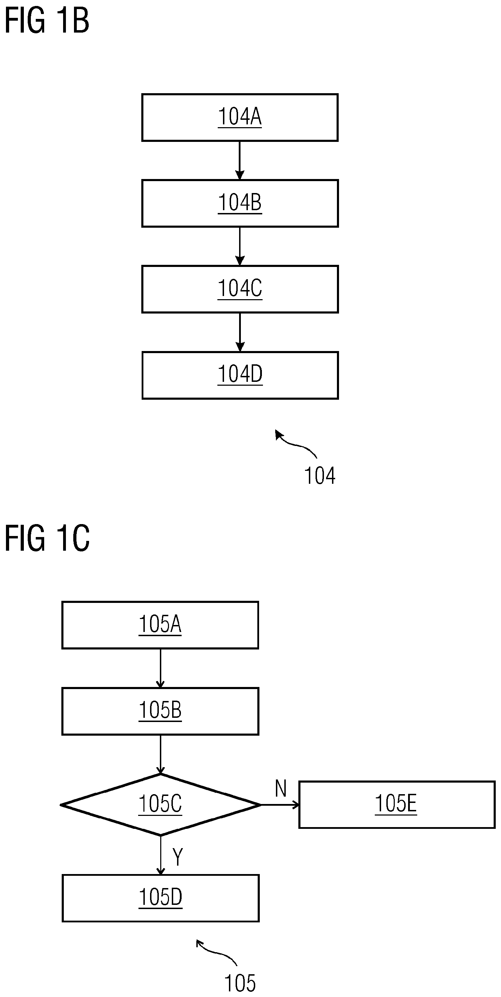

The step 103 of the method disclosed herein, comprises determining a cause of the power event based on the power network data. The cause of the power event comprises a load variation and/or a fault occurrence in the electrical power system. For determining a cause of the power event, the method disclosed herein employs power network data analysis logic. The step 104 of the method disclosed herein, comprises the power network data analysis logic determining a type of the power event based on power quality data and protection device data obtained from the power network data. The type of the power event comprises a fault indication in the electrical power system and/or an aberration in quality of the electrical power being carried in the electrical power system. Thus, the type of the power event can comprise a combination event wherein the power event comprises an occurrence of a fault prior to or post occurrence of an aberration of power quality of the electrical power. The step 105 of the method disclosed herein, comprises the power network data analysis logic identifying a location of the power event based on the power quality data. The location of the power event comprises a load side power event and/or a source side power event. The step 106 of the method disclosed herein, comprises the power network data analysis logic analyzing the power event based on the power network data, the type of the power event, and/or the location of the power event. Each of the steps 104, 105 and 106 of the power network data analysis logic are disclosed in detail in the descriptions of the FIGS 1B-1D.

At step 107, the method disclosed herein comprises generating a recommendation associated with the power event for the electrical power system based on the cause of the power event. The recommendation comprises a health status indication of one or more parts of the electrical power system, a replacement indication of one or more parts of the electrical power system, and/or a calibration indication of one or more parts of the electrical power system.

FIG 1B is a process flowchart illustrating the step 104 of the power network data analysis logic employed by the method disclosed in FIG 1A comprising, determining a type of the power event. At step 104A, the power network data analysis logic comprises extracting the power event data from the power network data, for example, by retrieving the power network data from the power system database. Alternatively at step 104A, the power network data analysis logic comprises obtaining the power event data from the power system database. At step 104B, the power network data analysis logic comprises obtaining a time of occurrence of the power event from the extracted power event data. At step 104C, the power network data analysis logic comprises extracting power quality data and protection device data from the power network data based on the time of occurrence of the power event. The power quality data and the protection device data are extracted for a predefined time window around the time of occurrence of the power event. The time window comprises, for example, 50 seconds before and after an instant at which the power event has occurred as per the obtained time of occurrence. At step 104D, the power network data analysis logic comprises analyzing the power quality data and the protection device data. The power quality data is analyzed to determine presence of an aberration in power quality based on deviation in values of parameters such as total harmonic distortion, flicker, unbalance voltage, unbalance current, individual harmonics, etc., from their standard steady state values. Similarly the protection device data is analyzed to determine whether any of the protection devices in the electrical power system have tripped during the time of occurrence of the power event based on their threshold limits. Thus, the power network data analysis logic provides an indication of whether an aberration in power quality is observed and/or a fault indication via tripping of a protection device has been observed in the electrical power system corresponding to the power event detected.

FIG 1C is a process flowchart illustrating the step 105 of the power network data analysis logic employed by the method disclosed in FIG 1A comprising, identifying a location of the power event. At step 105A, the power network data analysis logic comprises extracting voltage values from the power quality data associated with the time of occurrence of the power event. The voltage values are for one or more feeders in a substation of the electrical power system. At step 105B, the power network data analysis logic comprises extracting current values from the power quality data associated with the time of occurrence of the power event. The current values are for one or more feeders in a substation of the electrical power system. At step 105C, the power network data analysis logic comprises verifying whether the voltage values and the current values are simultaneously increasing or decreasing at the same time instant. If yes, then at step 105D, the power network data analysis logic comprises identifying the location of the power event to be a source side power event and if not, then at step 105E, the power network data analysis logic comprises identifying the location of the power event to be a load side power event. Each of the steps 104A-104D illustrated in FIG 1B and the steps 105A-105E disclosed herein, are performed by the power network data analysis logic for each power event detected by the method disclosed herein in the electrical power system.

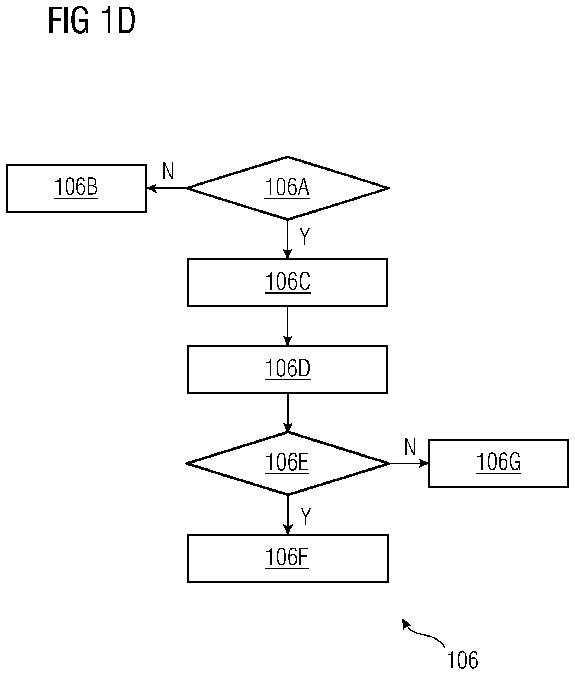

FIG 1D is a process flowchart illustrating the step 106 of the power network data analysis logic employed by the method disclosed in FIG 1A comprising, analyzing the power event. At step 106A, the power network data analysis logic comprises verifying whether the type of event determined is a combination event, that is, a fault indication prior to or post occurrence of an aberration of power quality of the electrical power. If no, that is, the power event comprises aberration of power quality but no fault occurrence indication then, at step 106B, based on the location of the power event identified, the cause of the power event is determined to be a load side, that is, a facility side load variation such as abrupt change in a load or a source side, that is, a utility side event such supply line variation. If yes, that is, the power event comprises an indication of an occurrence of a fault prior to or post occurrence of an aberration of power quality of the electrical power then, at step 106C, the power network data analysis logic comprises extracting topology data from the power network data. At step 106D, the power network data analysis logic comprises obtaining a sequence of occurrence of each of the power events based on the time of occurrence of the power events detected. At step 106E, the power network data analysis logic comprises verifying whether the aberration in power quality happened prior to indication of an occurrence of the fault. If yes, then at step 106F, the topology data and power quality data are analyzed along with the location of power event in order to determine whether the cause of the power event is load variation or an actual fault occurrence. Post analysis of the topology data and the power quality data, the protection device data is also analyzed for determining cause of the power event. If no, then at step 106G, the topology data and the protection device data are analyzed along with the location of power event in order to determine whether the cause of the power event is load variation or an actual fault occurrence. Post analysis of the topology data and the protection device data, the power quality data is also analyzed for determining cause of the power event.

FIG 2 illustrates a power network data analysis system (PNDAS) for analyzing power network data of an electrical power system. The PNDAS 200, according to the present invention, is installed on and accessible by a user device, for example, a personal computing device, a workstation, a client device, a network enabled computing device, any other suitable computing equipment, and combinations of multiple pieces of computing equipment. In a preferred embodiment, according to the present invention, the PNDAS 200 is downloadable and usable on the user device. In another embodiment according to the present invention, the PNDAS 200 is configured as a web based platform, for example, a website hosted on a server or a network of servers. In another embodiment according to the present invention, the PNDAS 200 is implemented in the cloud computing environment. The PNDAS 200 is developed, for example, using Google App engine cloud infrastructure of Google Inc., Amazon Web Services^{®} of Amazon Technologies, Inc., the Amazon elastic compute cloud EC2^{®} web service of Amazon Technologies, Inc., the Google^{®} Cloud platform of Google Inc., the Microsoft^{®} Cloud platform of Microsoft Corporation, etc. In an embodiment, the PNDAS 200 is configured as a cloud computing based platform implemented as a service for analyzing power network data of an electrical power system.

The power network data analysis system (PNDAS) 200 disclosed herein comprises a non-transitory computer readable storage medium and at least one processor communicatively coupled to the non-transitory computer readable storage medium. As used herein, "non-transitory computer readable storage medium" refers to all computer readable media, for example, non-volatile media, volatile media, and transmission media except for a transitory, propagating signal. The non-transitory computer readable storage medium is configured to store computer program instructions defined by modules, for example, 201, 202, 203, 204, etc., of the PNDAS 200. The processor is configured to execute the defined computer program instructions. As illustrated in FIG 2, the PNDAS 200 comprises a graphical user interface (GUI) 205. A user using the user device can access the PNDAS 200 via the GUI 205. The GUI 205 is, for example, an online web interface, a web based downloadable application interface such as Microsoft^{®} Windows^{®} application, etc. The PNDAS 200 further comprises a data obtaining module 201, an event detection module 202, a cause determination module 203, and a recommendation generation module 204.

The data obtaining module 201 obtains the power network data representing one or more parameters of electrical power being carried on the electrical power system. The data obtaining module 201 is in operable communication with a plurality of measurement and sensing devices mounted at various geographical points in a substation 207. The data obtaining module 201 computes power network data based on the data received from these devices in the substation 207. In an embodiment, according to the present invention, the data obtaining module 201 is in operable communication with a central database 209 comprising, for example, a database storing data at a substation control center. In an embodiment, according to the present invention, the data obtaining module 201 is in communication with the measurement and/or sensing devices of the substation 207 and the central database 209 via a communication network 208. The communication network is, for example, a wired network, a wireless network, or a network formed from any combination of these networks. The communication network is, for example, a plant bus, a field bus, a communication bus, etc. via which a plurality of measurement and/or sensing devices of the substation 207 communicate with the data obtaining module 201. The data obtaining module 201 stores the power network data in a power system database 206. The power system database 206 is, for example, a structured query language (SQL) data store or a not only SQL (NoSQL) data store. In an embodiment, according to the present invention, the power system database 202, can also be a location on a file system directly accessible by the PNDAS 200. In another embodiment according to the present invention, the power system database 202, is configured as cloud based database implemented in a cloud computing environment, where computing resources are delivered as a service over the communication network 208. As used herein, "cloud computing environment" refers to a processing environment comprising configurable computing physical and logical resources, for example, networks, servers, storage, applications, services, etc., and data distributed over the communication network 208, for example, the internet. The cloud computing environment provides on-demand network access to a shared pool of the configurable computing physical and logical resources.

The event detection module 202 detects a power event on the electrical power system from the power network data. The cause determination module 203 determines a cause of the power event based on the power network data wherein the cause of the power event comprises one or more of a load variation and a fault occurrence in the electrical power system. The cause determination module comprises modules 203A, 203B, and 203C that employ the power network data analysis logic disclosed in the detailed description of FIGS 1A-1D. The cause determination module 203 further comprises a type determination module 203A, a location identification module 203B and an event analysis module 203C. The type determination module 203A determines a type of the power event based on power quality data and protection device data obtained from the power network data. The location identification module 203B identifies a location of the power event based on the power quality data. The event analysis module 203C analyzes the power event based the power network data, the type of the power event, and/or the location of the power event. The recommendation generation module 204 generates a recommendation associated with the power event for the electrical power system based on the cause of the power event.

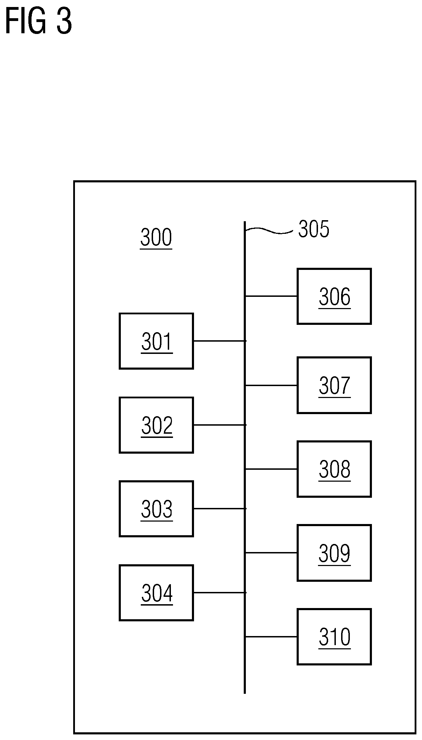

FIG 3 is a block diagram illustrating architecture of a computer system 300 employed by the power network data analysis system (PNDAS) 200 illustrated in FIG 2, for analyzing power network data of an electrical power system. The PNDAS 200 employs the architecture of the computer system 300 illustrated in FIG 3. The computer system 300 is programmable using a high level computer programming language. The computer system 300 may be implemented using programmed and purposeful hardware. As illustrated in FIG 3, the computer system 300 comprises a processor 301, a non-transitory computer readable storage medium such as a memory unit 302 for storing programs and data, an input/output (I/O) controller 303, a network interface 304, a data bus 305, a display unit 306, input devices 307, a fixed media drive 308 such as a hard drive, a removable media drive 309 for receiving removable media, output devices 310, etc. The processor 301 refers to any one of microprocessors, central processing unit (CPU) devices, finite state machines, microcontrollers, digital signal processors, an application specific integrated circuit (ASIC), a field-programmable gate array (FPGA), etc., or any combination thereof, capable of executing computer programs or a series of commands, instructions, or state transitions. The processor 301 may also be implemented as a processor set comprising, for example, a general purpose microprocessor and a math or graphics coprocessor. The processor 301 is selected, for example, from the Intel^{®} processors, Advanced Micro Devices (AMD^{®}) processors, International Business Machines (IBM^{®}) processors, etc. The PNDAS 200 disclosed herein is not limited to a computer system 300 employing a processor 301. The computer system 300 may also employ a controller or a microcontroller. The processor 301 executes the modules, for example, 201, 202, 203, 204, etc., of the PNDAS 200.

The memory unit 302 is used for storing programs, applications, and data. For example, the data obtaining module 201, the event detection module 202, the cause determination module 203, the recommendation generation module 204, etc., of the PNDAS 200 are stored in the memory unit 302 of the computer system 300. The memory unit 302 is, for example, a random access memory (RAM) or another type of dynamic storage device that stores information and instructions for execution by the processor 301. The memory unit 302 also stores temporary variables and other intermediate information used during execution of the instructions by the processor 301. The computer system 300 further comprises a read only memory (ROM) or another type of static storage device that stores static information and instructions for the processor 301. The I/O controller 303 controls input actions and output actions performed by the power network data analysis system (PNDAS) 200.

The network interface 304 enables connection of the computer system 300 to the communication network 208. For example, the power network data analysis system (PNDAS) 200 connects to the communication network 208 via the network interface 304. In an embodiment, the network interface 304 is provided as an interface card also referred to as a line card. The network interface 304 comprises, for example, interfaces using serial protocols, interfaces using parallel protocols, and Ethernet communication interfaces, interfaces based on wireless communications technology such as satellite technology, radio frequency (RF) technology, near field communication, etc. The data bus 305 permits communications between the modules, for example, 201, 202, 203, 204, etc., of PNDAS 200.

The display unit 306, via the graphical user interface (GUI) 205, displays information such as a recommendation report generated by the recommendation generation module 204, user interface elements such as text fields, buttons, windows, etc. The display unit 306 comprises, for example, a liquid crystal display, a plasma display, an organic light emitting diode (OLED) based display, etc. The input devices 307 are used for inputting data into the computer system 300. The input devices 307 are, for example, a keyboard such as an alphanumeric keyboard, a touch sensitive display device, and/or any device capable of sensing a tactile input.

Computer applications and programs are used for operating the computer system 300. The programs are loaded onto the fixed media drive 308 and into the memory unit 302 of the computer system 300 via the removable media drive 309. In an embodiment, the computer applications and programs may be loaded directly via the communication network 208. Computer applications and programs are executed by double clicking a related icon displayed on the display unit 306 using one of the input devices 307. The output devices 310 output the results of operations performed by the power network data analysis system (PNDAS) 200. For example, the PNDAS 200 provides graphical representation of the recommendation reports generated by the recommendation generation module 204, using the output devices 310. The graphical representation comprises, for example, topology view of the substation 207 and recommendation to indicate status of the electrical components or replace or calibrate the electrical components in the substation 207.

The processor 301 executes an operating system, for example, the Linux^{®} operating system, the Unix^{®} operating system, any version of the Microsoft^{®} Windows^{®} operating system, the Mac OS of Apple Inc., the IBM^{®} OS/2, etc. The computer system 300 employs the operating system for performing multiple tasks. The operating system is responsible for management and coordination of activities and sharing of resources of the computer system 300. The operating system further manages security of the computer system 300, peripheral devices connected to the computer system 300, and network connections. The operating system employed on the computer system 300 recognizes, for example, inputs provided by the users using one of the input devices 307, the output display, files, and directories stored locally on the fixed media drive 308. The operating system on the computer system 300 executes different programs using the processor 301. The processor 301 and the operating system together define a computer platform for which application programs in high level programming languages are written.

The processor 301 of the computer system 300 employed by the power network data analysis system (PNDAS) 200 retrieves instructions defined by the data obtaining module 201, the event detection module 202, the cause determination module 203, the recommendation generation module 204, etc., of the PNDAS 200 for performing respective functions disclosed in the detailed description of FIG 2. The processor 301 retrieves instructions for executing the modules, for example, 201, 202, 203, 204, etc., of the PNDAS 200 from the memory unit 302. A program counter determines the location of the instructions in the memory unit 302. The program counter stores a number that identifies the current position in the program of each of the modules, for example, 201, 202, 203, 204, etc., of the PNDAS 200. The instructions fetched by the processor 301 from the memory unit 302 after being processed are decoded. The instructions are stored in an instruction register in the processor 301. After processing and decoding, the processor 301 executes the instructions, thereby performing one or more processes defined by those instructions.

At the time of execution, the instructions stored in the instruction register are examined to determine the operations to be performed. The processor 301 then performs the specified operations. The operations comprise arithmetic operations and logic operations. The operating system performs multiple routines for performing a number of tasks required to assign the input devices 307, the output devices 310, and memory for execution of the modules, for example, 201, 202, 203, 204, etc., of the power network data analysis system (PNDAS) 200. The tasks performed by the operating system comprise, for example, assigning memory to the modules, for example, 201, 202, 203, 204, etc., of the PNDAS 200, and to data used by the PNDAS 200, moving data between the memory unit 302 and disk units, and handling input/output operations. The operating system performs the tasks on request by the operations and after performing the tasks, the operating system transfers the execution control back to the processor 301. The processor 301 continues the execution to obtain one or more outputs. The outputs of the execution of the modules, for example, 201, 202, 203, 204, etc., of the PNDAS 200 are displayed to the user on the GUI 205.

For purposes of illustration, the detailed description refers to the power network data analysis system (PNDAS) 200 being run locally on the computer system 300; however the scope of the present invention is not limited to the PNDAS 200 being run locally on the computer system 300 via the operating system and the processor 301, but may be extended to run remotely over the communication network 208 by employing a web browser and a remote server, a handheld device, or other electronic devices. One or more portions of the computer system 300 may be distributed across one or more computer systems (not shown) coupled to the communication network 208.

Disclosed herein is also a computer program product comprising a non-transitory computer readable storage medium that stores computer program codes comprising instructions executable by at least one processor 301 for analyzing power network data of an electrical power system, as disclosed in the present invention. The computer program product comprises a first computer program code for obtaining the power network data representing one or more parameters of electrical power being carried on the electrical power system; a second computer program code for detecting a power event on the electrical power system from the power network data; a third computer program code for determining a cause of the power event based on the power network data; and a fourth computer program code for generating a recommendation associated with the power event for the electrical power system based on the cause of the power event.

The third computer program code comprises a fifth computer program code, a sixth computer program code, and a seventh computer program code for employing the power network data analysis logic disclosed in the detailed description of the FIGS 1A-1D. The fifth computer program code determines a type of the power event based on power quality data and protection device data obtained from the power network data. The sixth computer program code identifies a location of the power event based on the power quality data. The seventh computer program code analyzes the power event based on the power network data, the type of the power event, and/or the location of the power event.

In an embodiment, a single piece of computer program code comprising computer executable instructions performs one or more steps of the method according to the present invention, for analyzing power network data of an electrical power system. The computer program codes comprising computer executable instructions are embodied on the non-transitory computer readable storage medium. The processor 301 of the computer system 300 retrieves these computer executable instructions and executes them. When the computer executable instructions are executed by the processor 301, the computer executable instructions cause the processor 301 to perform the steps of the method for configuring a protection system of a power network.

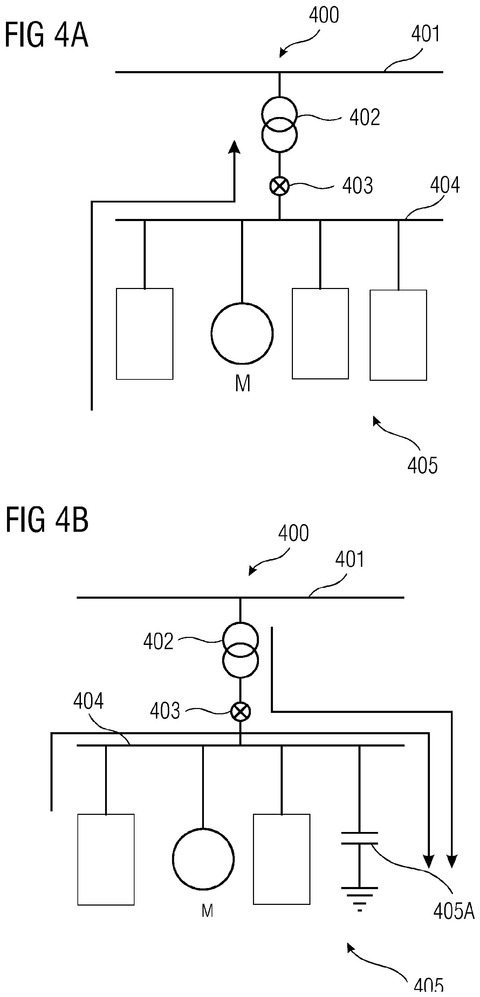

FIGS 4A-7 illustrate an example of a power event that comprises a fault occurrence as well as an aberration in the power quality, wherein, the fault occurrence is being triggered as a result of the aberration in the power quality.

FIGS 4A-4B illustrate an electrical power system 400 comprising linear and nonlinear loads 405. The electrical power system 400 comprises a power line 401 to which a transformer 402 and a circuit breaker 403 are connected. The circuit breaker 403 connects and disconnects a busbar 404 to the power line 401. Also, connected to the busbar 404 are the linear and nonlinear loads 405, comprising, for example, a motor, an illumination device such as a cluster of lamps, etc. As illustrated in FIG 4A, harmonics generated due to nonlinear loads tend to move in the direction of the source, that is, the power line 401 from the load 405 due to a low impedance path offered by the power line. As illustrated in FIG 4B, when a capacitor 405A is connected to the busbar 404, the harmonics tend to move towards the capacitor not only from the load side but also from the source side. Due to this flow of harmonics, the circuit breaker 403 tends to overload due to excess harmonics.

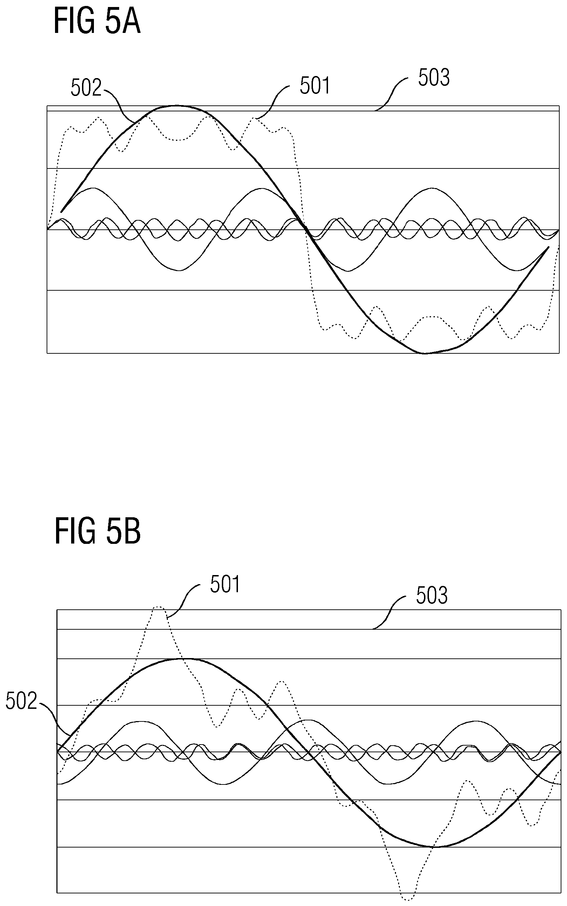

FIGS 5A-5B illustrate graphical waveforms during operation of a protection device, that is, the circuit breaker 403 in the electrical power system 400, illustrated in FIGS 4A-4B. The total root mean square (RMS) current waveform 501 represents a total harmonic distortion current including fundamental and harmonics. The waveform 502 represents the fundamental component of the current. The circuit breaker 403 is overloaded due to excess flow of harmonics as disclosed in the detailed description of FIGS 4A-4B. Due to an overload condition, the circuit breaker 403 either malfunctions, that is, fails to trip even when the fundamental value, as indicated by the fundamental waveform 502, is higher than the threshold trip value set 503, as illustrated in FIG 5A, or the circuit breaker 403 trips erroneously despite of the fundamental value, as indicated by the fundamental waveform 502, being lower than the threshold trip value set 503, as illustrated in FIG 5B. As illustrated in FIG 5A, the circuit breaker 403 malfunctions because the presence of harmonics, as indicated by the total RMS current waveform 501, reduces the peak value of the fundamental waveform 502. As illustrated in FIG 5B, the circuit breaker 403 trips erroneously because the presence of harmonics, as indicated by the total RMS current waveform 501, increases the peak value of the fundamental waveform 502.

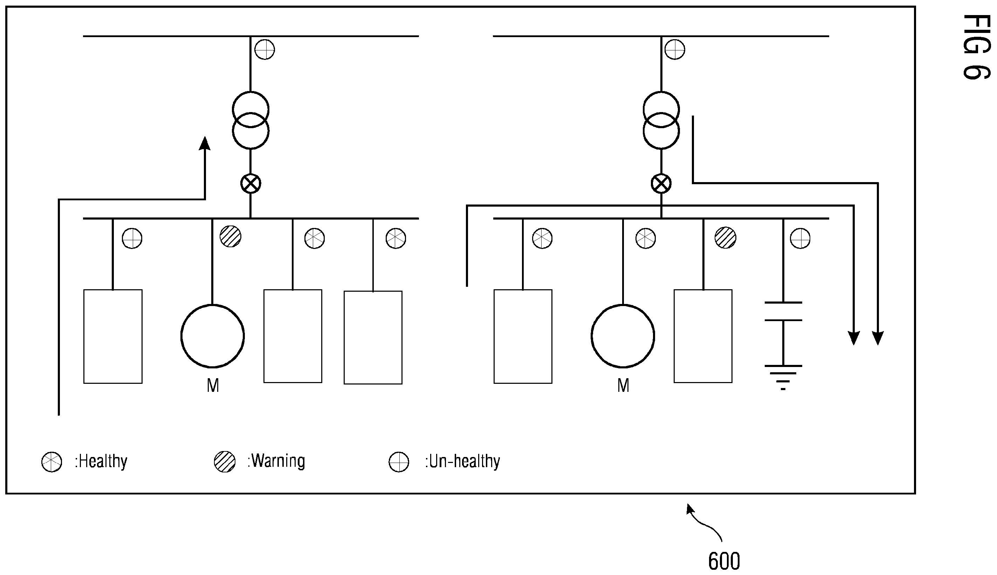

FIGS 6-7 illustrate screenshots of a graphical user interface (GUI) 205 provided by the power network data analysis system (PNDAS) 200, as disclosed in the detailed description of FIG 2, for rendering recommendations generated by the PNDAS 200 based on a cause of occurrence of a power event in the electrical power system 400 illustrated in FIGS 4A-4B. In order to generate the recommendations, the PNDAS 200, obtains the power network data and detects the power event, that is, aberration in power quality due to an increased amount of harmonics distortion as well as fault occurrence indication, for example, due to erroneous tripping of the circuit breaker 403. The type of such a power event is identified to be a combination power event including fault occurrence indication post an aberration in the power quality. Based on the type of the power event identified, the PNDAS 200 determines whether the power event occurred at the load side or the source side. In this example, it is observed from the power quality data that the voltage and the current values are following an inverse trend with respect to one another at a given time instant, that is, the voltage increases while the current dips. Therefore, the PNDAS 200 identifies the power event to be at the load side. To determine a cause of the power event, the PNDAS 200 further analyzes the power event based on the power quality data and the topology data as the power quality aberration has happened before the fault occurrence indication. The PNDAS 200 obtains the power quality data. The power quality data recorded during a fault occurrence, comprises a comparison of a current measured by the power quality device, for example, the circuit breaker 403, as a fundamental and the total root mean square (RMS) values including the harmonics and fundamental. The PNDAS 200 further obtains from the protection device data, threshold trip levels of the circuit breaker 403 and compares the peak value of the fundamental with the threshold trip levels and determines the cause to be an erroneous tripping of the circuit breaker 403 due to increased harmonics that resulted in the peak value of the fundamental overshooting the threshold trip level. Thus, the cause of the power event is determined to be an actual aberration in power quality due to load variation in the electrical power system 400.

As illustrated in FIG 6, the power network data analysis system (PNDAS) 200 generates a graphical representation 600 of a health status indication as a recommendation indicating the operating status of each of the electrical components in the electrical power system 400. As a result of the continuous increase in the harmonics and the associated root mean square (RMS) value, the PNDAS 200 can generate a warning or an unhealthy status indication at the power line 401 or at the bus bar 404 to provide a preventive indication of a fault that could occur. The health status can also be indicated via a topology view.

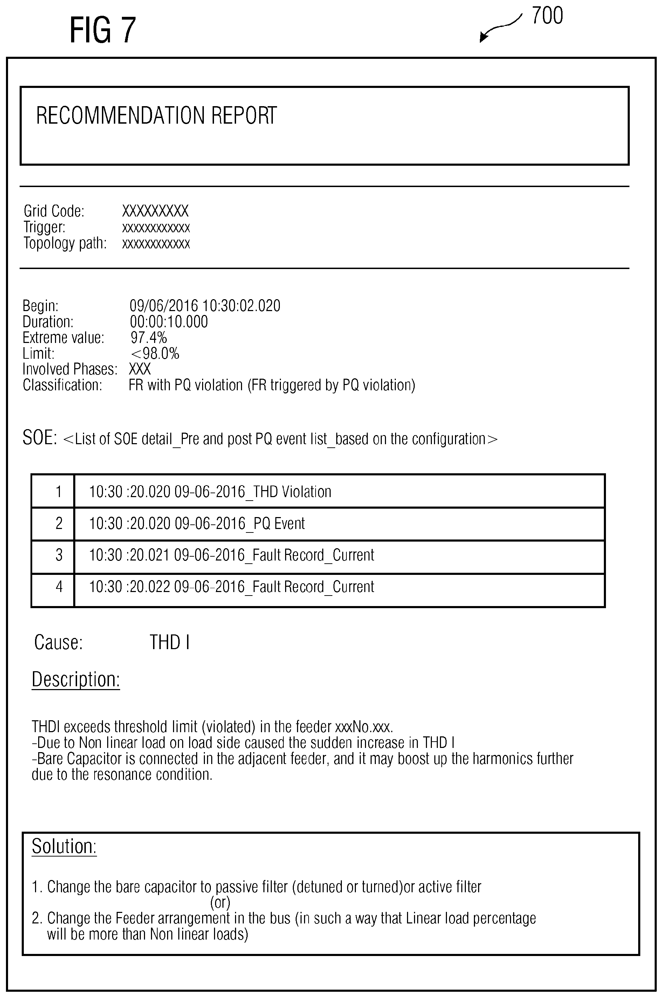

As illustrated in FIG 7, the power network data analysis system (PNDAS) 200 generates a graphical representation 700 illustrating a recommendation report comprising the cause of the power event determined to be total harmonic distortion followed by a recommendation stating replacement of the capacitor 405A to a passive filter or an active filter or to calibrate the load linear and the nonlinear load 405 in a way so as to increase percentage of linear load on the busbar 404. The recommendation report can also include age of the capacitor 405A indicating deterioration in its reactive power rating, based on the power quality data obtained, that is, the reactive power value of the capacitor 405A and based on the topology data, that is, position of the capacitor 405A in the electrical power system 400. The recommendation report can also include indication of a life of a protection device, that is, the circuit breaker 403 based on the protection device data indicating maximum number of switching available as per the manufacturer's data sheet and the actual number of switching obtained as a part of the protection device data. Thus, the PNDAS 200 generates recommendations comprising an overall health status indication, replacement indication, and calibration indication of the electrical components in the electrical power system 400.

Consider an example, where a power event detected on an electrical power system is of a type of a combination event including an aberration in power quality post a fault occurrence indication. The fault occurrence indication comprises a line to ground fault followed by a voltage swell in two of the phases and a voltage dip in one of the phases occurring at different time instants, in a three phase balance load electrical power system. The power network data analysis system (PNDAS) 200 analyzes such a power event at individual phase level. Since the fault occurrence indication is prior to the aberration in power quality, the PNDAS analyzes the protection device data associated with each of the phases and the topology data of the electrical power system to determine whether the root cause of the power event is load variation or a fault. Based on the protection device data and the topology data, the PNDAS 200 determines the fault to be a line to ground fault occurring on one of the phases and further based on the power quality data the PNDAS 200 determines that due to a line to ground fault on one of the phases the voltage dipped in that phase however, due to balance condition in the remaining phases, a voltage swell was observed in each of the remaining phases. Thus, the PNDAS 200 determines the cause of the power event to be an actual fault occurrence at the source side due to simultaneous dip in current followed by voltage at a given time instant, and the aberration in power quality is found to be not resulting from load variation. In this case, the PNDAS 200 generates a recommendation stating that the aberration in power quality is due to a fault that could be transient or permanent in nature. Therefore, please please rectify the fault to reconnect the load.

Consider another example, where a power event detected on an electrical power system is a sheer aberration in power quality without any fault occurrence indication. In this example, the aberration in power quality is a voltage swell due to switching on of a capacitor bank in a load section with minimal inductive load. In this example, the power network data analysis system (PNDAS) 200 identifies the location of the power event to be a load side event as along with the voltage swell the current is observed to dip from the power quality data. The PNDAS 200 thereby determines the cause of the power event to be a load variation at the load side of the electrical power system and generates a recommendation to switch off the capacitor bank, replace the capacitor bank with an automatic power factor correction facilitated capacitor, or switch on an inductive load that balances the capacitive load in the electrical power system.

It will be readily apparent that the various methods, algorithms, and computer programs disclosed herein may be implemented on computer readable media appropriately programmed for computing devices. As used herein, "computer readable media" refers to non-transitory computer readable media that participate in providing data, for example, instructions that may be read by a computer, a processor or a similar device. Non-transitory computer readable media comprise all computer readable media, for example, non-volatile media, volatile media, and transmission media, except for a transitory, propagating signal.

The computer programs that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the computer program codes comprising computer executable instructions may be implemented in any programming language. The computer program codes or software programs may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof. The computer program product disclosed herein comprises one or more computer program codes for implementing the processes of various embodiments.

Where databases are described such as the power system database 206, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a database. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

At last, the embodiments in the present disclosure are not necessarily within the scope of the invention which is limited by the independent claims 1,9 and 11.

## Claims

1. A method (100) of analyzing a power network data of an electrical power system (400), wherein the power network data comprises a power quality data, wherein the power quality data is a data measured by power quality devices in the electrical power system, a protection device data associated with a plurality of protection devices (402, 403) in the electrical power system (400), wherein the protection device data is a configuration data associated with the protection devices, a power event data, wherein the power event data is a data associated with a power event, and a topology data, wherein the topology data is a data associated with one or more substations in the electrical power system and wherein the topology data comprises details of the electrical components, wherein the electrical components comprise at least one of power lines, buses, circuit breakers, switches, relays, transformers, as well as the loads such as motors, drives, capacitors, panelboards, that enable to monitor load variation of the electrical power system, and wherein the power network data comprises a measured data, the method comprising:
- obtaining the power network data representing one or more parameters of electrical power being carried on the electrical power system (400);
- detecting the power event on the electrical power system (400) from the power network data, wherein the power event comprises a momentary event occurring on the electrical power system (400);
- determining a cause of the power event based on the power network data by employing a power network data analysis logic, wherein the power network data analysis logic comprises determining a type of the power event based on the power quality data and the protection device data obtained from the power network data, wherein the power network data analysis logic further comprises identifying a location of the power event based on the power quality data and comprises analyzing the power event based on one or more of the power network data, the type of the power event, and the location of the power event; and
- generating a recommendation associated with the power event for the electrical power system (400) based on the cause of the power event;
**characterized in that**:
- identifying the location of the power event includes identifying whether the location of the power event is on a load side or on a source side.

2. The method (100) according to claim 1, wherein the identifying of the location of the power event includes extracting voltage values from the power quality data associated with the time of occurrence of the power event, extracting current values from the power quality data associated with the time of occurrence of the power event and verifying whether the voltage values and the current values are simultaneously increasing or decreasing at the same time instant, thusly indicating that the location of the power event to be a source side power event, or that the location of the power event to be a load side power event if the voltage values and the current values are not simultaneously increasing or decreasing at the same time instant.

3. The method accorsing to claim 1 or 2, wherein power quality data and the protection device data are extracted for a predefined time window around a time of occurrence of the power event.

4. The method (100) according to any of claims 1 to 3, wherein the cause of the power event comprises one or more of a load variation and a fault occurrence in the electrical power system (400).

5. The method (100) according to any of claims 1 to 4, wherein determining a type of the power event includes determining whether an aberration in power quality is observed and/or a fault indication via tripping of a protection device has been observed in the electrical power system corresponding to the power event detected.

6. The method (100) according to any of claims 1 to 5, wherein the type of the power event comprises one or more of a fault indication in the electrical power system (400) and an aberration in quality of the electrical power being carried in the electrical power system (400).

7. The method (100) according to any of claims 1 to 6, wherein the power network data analysis logic comprises extracting topology data from the power network data and wherein the topology data and power quality data are analyzed along with the location of power event in order to determine whether the cause of the power event is load variation or an actual fault occurrence.

8. The method (100) according to any of claims 1 to 7, wherein the recommendation comprises one or more of a health status indication of one or more parts of the electrical power system (400), a replacement indication of one or more parts of the electrical power system (400), and a calibration indication of one or more parts of the electrical power system (400).

9. A power network data analysis system (200) for analyzing power network data of an electrical power system (400), the power network data analysis system (200) comprising:
a non-transitory computer readable storage medium (302) storing computer program instructions defined by modules (201, 202, 203, and 204) of the power network data analysis system (200);
at least one processor (301) communicatively coupled to the non-transitory computer readable storage medium (302), the at least one processor (301) executing the defined computer program instructions; and
the modules (201, 202, 203, and 204) of the power network data analysis system (200) comprising:
- a data obtaining module (201) configured to obtain the power network data representing one or more parameters of electrical power being carried on the electrical power system (400), wherein the power network data comprises power quality data, wherein power quality data is data measured by power quality devices in the electrical power system, protection device data associated with a plurality of protection devices in the electrical power system (400), wherein protection device data is configuration data associated with the protection devices, power event data, wherein power event data is data associated with the power event, and topology data, wherein topology data is data associated with one or more substations in the electrical power system, wherein the topology data comprises details of the electrical components, wherein the electrical components comprise at least one of power lines, buses, circuit breakers, switches, relays, transformers, as well as the loads such as motors, drives, capacitors, panelboards, that enable to monitor load variation of the electrical power system, and wherein the power network data comprises a measured data ;
- an event detection module (202) configured to detect a power event on the electrical power system (400) from the power network data, wherein the power event comprises a momentary event occurring on the electrical power system (400);
- a cause determination module (203) configured to determine a cause of the power event based on the power network data, wherein the cause of the power event comprises one or more of a load variation and a fault occurrence in the electrical power system (400), wherein the cause determination module (203) comprises modules (203A, 203B, and 203C) configured to employ a power network data analysis logic, wherein the modules (203A, 203B, and 203C) of the cause determination module (203) comprise a type determination module (203A) configured to determine a type of the power event based on power quality data and protection device data obtained from the power network data, wherein the type of the power event comprises one or more of a fault indication in the electrical power system (400) and an aberration in quality of the electrical power being carried in the electrical power system (400), a location identification module (203B) configured to identify a location of the power event based on the power quality data, and an event analysis module (203C) configured to analyze the power event based on one or more of the power network data, the type of the power event, and the location of the power event; and
- a recommendation generation module (204) configured to generate a recommendation associated with the power event for the electrical power system (400) based on the cause of the power event, wherein the recommendation comprises one or more of a health status indication of one or more parts of the electrical power system (400), a replacement indication of one or more parts of the electrical power system (400), and a calibration indication of one or more parts of the electrical power system (400);
**characterized in that**:
- the location identification module (203B) is configured to identify whether the location of the power event is a load side power event or a source side power event.

10. The power network data analysis system (201) according to claim 9, wherein the location identification module (203B) is configured to identify the location of the power event by extracting voltage values from the power quality data associated with the time of occurrence of the power event, extracting current values from the power quality data associated with the time of occurrence of the power event and verifying whether the voltage values and the current values are simultaneously increasing or decreasing at the same time instant, thusly indicating that the location of the power event is a source side power event, or that the location of the power event is a load side power event if the voltage values and the current values are not simultaneously increasing or decreasing at the same time instant.

11. A computer program product comprising a non-transitory computer readable storage medium (302), the non-transitory computer readable storage medium (302) storing computer program codes that comprise instructions executable by at least one processor (301), the computer program codes comprising:
- a first computer program code for obtaining power network data representing one or more parameters of electrical power being carried on the electrical power system (400), wherein the power network data comprises power quality data, wherein power quality data is data measured by power quality devices in the electrical power system, protection device data associated with a plurality of protection devices in the electrical power system (400), wherein protection device data is configuration data associated with the protection devices, power event data, wherein power event data is data associated with the power event, and topology data, wherein topology data is data associated with one or more substations in the electrical power system, wherein the topology data comprises details of the electrical components, wherein the electrical components comprise at least one of power lines, buses, circuit breakers, switches, relays, transformers, as well as the loads such as motors, drives, capacitors, panelboards, that enable to monitor load variation of the electrical power system, and wherein the power network data is one or more of a measured data and a computed data and wherein the power network data comprises a measured data;
- a second computer program code for detecting a power event on the electrical power system (400) from the power network data, wherein the power event comprises a momentary event occurring on the electrical power system (400);
- a third computer program code for determining a cause of the power event based on the power network data, wherein the cause of the power event comprises one or more of a load variation and a fault occurrence in the electrical power system (400), the third computer program code comprising computer program codes for employing a power network data analysis logic; and
- a fourth computer program code for generating a recommendation associated with the power event for the electrical power system (400) based on the cause of the power event, wherein the recommendation comprises one or more of a health status indication of one or more parts of the electrical power system (400), a replacement indication of one or more parts of the electrical power system (400), and a calibration indication of one or more parts of the electrical power system (400);
wherein the computer program codes of the third computer program code comprises a fifth computer program code for determining a type of the power event based on power quality data and protection device data obtained from the power network data, wherein the type of the power event comprises one or more of a fault indication in the electrical power system (400) and an aberration in quality of the electrical power being carried in the electrical power system (400), a sixth computer program code for identifying a location of the power event based on the power quality data, and a seventh computer program code for analyzing the power event based on one or more of the power network data, the type of the power event, and the location of the power event
**characterized in that**:
- the sixth computer program code identifies the location of the power event as a load side power event or a source side power event.

## Patentansprüche

1. Verfahren (100) zum Analysieren von Leistungsversorgungsnetzwerkdaten eines elektrischen Leistungsversorgungssystems (400), wobei die Leistungsversorgungsnetzwerkdaten Leistungsqualitätsdaten, wobei die Leistungsqualitätsdaten Daten sind, die durch Leistungsqualitätsvorrichtungen in dem elektrischen Leistungsversorgungssystem gemessen werden, Schutzvorrichtungsdaten, die mit einer Mehrzahl von Schutzvorrichtungen (402, 403) in dem elektrischen Leistungsversorgungssystem (400) assoziiert sind, wobei die Schutzvorrichtungsdaten Konfigurationsdaten sind, die mit den Schutzvorrichtungen assoziiert sind, Leistungsereignisdaten, wobei die Leistungsereignisdaten Daten sind, die mit einem Leistungsereignis assoziiert sind, und Topologiedaten umfassen, wobei die Topologiedaten Daten sind, die mit einer oder mehreren Unterstationen in dem elektrischen Leistungsversorgungssystem assoziiert sind, und wobei die Topologiedaten Details der elektrischen Komponenten umfassen, wobei die elektrischen Komponenten mindestens eines von Stromleitungen, Bussen, Schutzschaltern, Schaltern, Relais, Transformatoren sowie Lasten wie Motoren, Antrieben, Kondensatoren und Schalttafeln umfassen, die es ermöglichen, Lastschwankungen des elektrischen Leistungsversorgungssystems zu überwachen, und wobei die Leistungsversorgungsnetzwerkdaten Messdaten umfassen, wobei das Verfahren Folgendes umfasst:
- Erlangen der Leistungsversorgungsnetzwerkdaten, die einen oder mehrere Parameter der elektrischen Leistung darstellen, die auf dem elektrischen Leistungsversorgungssystem (400) befördert wird;
- Erkennen des Leistungsereignisses an dem elektrischen Leistungsversorgungssystem (400) aus den Leistungsversorgungsnetzwerkdaten, wobei das Leistungsereignis ein momentanes Ereignis umfasst, das an dem elektrischen Leistungsversorgungssystem (400) auftritt;
- Bestimmen einer Ursache des Leistungsereignisses basierend auf den Leistungsversorgungsnetzwerkdaten durch Einsetzen einer Leistungsversorgungsnetzwerkdatenanalyselogik, wobei die Leistungsversorgungsnetzwerkdatenanalyselogik Bestimmen einer Art des Leistungsereignisses basierend auf den Leistungsqualitätsdaten und den Schutzvorrichtungsdaten umfasst, die aus den Leistungsversorgungsnetzwerkdaten erlangt werden, wobei die Leistungsversorgungsnetzwerkdatenanalyselogik ferner Identifizieren eines Standorts des Leistungsereignisses basierend auf den Leistungsqualitätsdaten umfasst und Analysieren des Leistungsereignisses basierend auf einem oder mehreren von den Leistungsversorgungsnetzwerkdaten, der Art des Leistungsereignisses und dem Standort des Leistungsereignisses umfasst; und
- Erstellen einer Empfehlung, die mit dem Leistungsereignis assoziiert ist, für das elektrische Leistungsversorgungssystem (400) basierend auf der Ursache des Leistungsereignisses; **dadurch gekennzeichnet, dass**:
- das Identifizieren des Standorts des Leistungsereignisses Identifizieren umfasst, ob sich der Standort des Leistungsereignisses auf einer Lastseite oder auf einer Quellenseite befindet.

2. Verfahren (100) nach Anspruch 1, wobei das Identifizieren des Standorts des Leistungsereignisses Extrahieren von Spannungswerten aus den Leistungsqualitätsdaten, die mit dem Zeitpunkt des Auftretens des Leistungsereignisses assoziiert sind, Extrahieren von Stromwerten aus den Leistungsqualitätsdaten, die mit dem Zeitpunkt des Auftretens des Leistungsereignisses assoziiert sind, und Verifizieren umfasst, ob die Spannungswerte und die Stromwerte gleichzeitig zum gleichen Zeitpunkt ansteigen oder abfallen, wodurch angezeigt wird, dass der Standort des Leistungsereignisses ein quellenseitiges Leistungsereignis ist, oder dass der Standort des Leistungsereignisses ein lastseitiges Leistungsereignis ist, falls die Spannungswerte und die Stromwerte nicht gleichzeitig zum gleichen Zeitpunkt ansteigen oder abfallen.

3. Verfahren nach Anspruch 1 oder 2, wobei Leistungsqualitätsdaten und die Schutzvorrichtungsdaten für ein vordefiniertes Zeitfenster um einen Zeitpunkt des Auftretens des Leistungsereignisses extrahiert werden.

4. Verfahren (100) nach einem der Ansprüche 1 bis 3, wobei die Ursache des Leistungsereignisses eines oder mehrere von einer Lastschwankung und einem Auftreten eines Fehlers in dem elektrischen Leistungsversorgungssystem (400) umfasst.

5. Verfahren (100) nach einem der Ansprüche 1 bis 4, wobei das Bestimmen einer Art des Leistungsereignisses Bestimmen umfasst, ob eine Abweichung in der Leistungsqualität beobachtet wird und/oder eine Fehleranzeige durch Auslösen einer Schutzvorrichtung in dem elektrischen Leistungsversorgungssystem beobachtet wurde, die dem detektierten Leistungsereignis entspricht.

6. Verfahren (100) nach einem der Ansprüche 1 bis 5, wobei die Art des Leistungsereignisses eines oder mehrere von einer Fehleranzeige in dem elektrischen Leistungsversorgungssystem (400) und einer Abweichung in der Qualität der elektrischen Leistung umfasst, die in dem elektrischen Leistungsversorgungssystem (400) befördert wird.

7. Verfahren (100) nach einem der Ansprüche 1 bis 6, wobei die Leistungsnetzwerkdatenanalyselogik Extrahieren von Topologiedaten aus den Leistungsversorgungsnetzwerkdaten umfasst und wobei die Topologiedaten und die Leistungsqualitätsdaten zusammen mit dem Standort des Leistungsereignisses analysiert werden, um zu bestimmen, ob die Ursache des Leistungsereignisses eine Lastschwankung oder ein Auftreten eines tatsächlichen Fehlers ist.

8. Verfahren (100) nach einem der Ansprüche 1 bis 7, wobei die Empfehlung eines oder mehrere von einer Gesundheitsstatusanzeige eines oder mehrerer Teile des elektrischen Leistungsversorgungssystems (400), einer Ersetzungsanzeige eines oder mehrerer Teile des elektrischen Leistungsversorgungssystems (400) und einer Kalibrierungsanzeige eines oder mehrerer Teile des elektrischen Leistungsversorgungssystems (400) umfasst.

9. Leistungsnetzwerkdatenanalysesystem (200) zum Analysieren von Leistungsversorgungsnetzwerkdaten eines elektrischen Leistungsversorgungssystems (400), wobei das Leistungsnetzwerkdatenanalysesystem (200) Folgendes umfasst:
ein nichtflüchtiges computerlesbares Speichermedium (302), das Computerprogrammanweisungen speichert, die durch Module (201, 202, 203 und 204) des Leistungsnetzwerkanalysesystems (200) definiert sind;
mindestens einen Prozessor (301), der kommunikativ mit dem nichtflüchtigen computerlesbaren Speichermedium (302) gekoppelt ist, wobei der mindestens eine Prozessor (301) die definierten Computerprogrammanweisungen ausführt; und
wobei die Module (201, 202, 203 und 204) des Leistungsversorgungsnetzwerkdatenanalysesystems (200) Folgendes umfassen:
- ein Datenerlangungsmodul (201), das dazu ausgelegt ist, die Leistungsversorgungsnetzwerkdaten zu erlangen, die einen oder mehrere Parameter elektrischer Leistung darstellen, die auf dem elektrischen Leistungsversorgungssystem (400) befördert wird, wobei die Leistungsversorgungsnetzwerkdaten Leistungsqualitätsdaten, wobei Leistungsqualitätsdaten Daten sind, die durch Leistungsqualitätsvorrichtungen in dem elektrischen Leistungsversorgungssystem gemessen werden, Schutzvorrichtungsdaten, die mit einer Mehrzahl von Schutzvorrichtungen in dem elektrischen Leistungsversorgungssystem (400) assoziiert sind, wobei Schutzvorrichtungsdaten Konfigurationsdaten sind, die mit den Schutzvorrichtungen assoziiert sind, Leistungsereignisdaten, wobei Leistungsereignisdaten Daten sind, die mit dem Leistungsereignis assoziiert sind, und Topologiedaten umfassen, wobei Topologiedaten Daten sind, die mit einer oder mehreren Unterstationen in dem elektrischen Leistungsversorgungssystem assoziiert sind, wobei die Topologiedaten Details der elektrischen Komponenten umfassen, wobei die elektrischen Komponenten mindestens eines von Stromleitungen, Bussen, Schutzschaltern, Schaltern, Relais, Transformatoren sowie Lasten wie etwa Motoren, Antrieben, Kondensatoren und Schalttafeln umfassen, die es ermöglichen, Lastschwankungen des elektrischen Leistungsversorgungssystems zu überwachen, und wobei die Leistungsversorgungsnetzwerkdaten Messdaten umfassen;
- ein Ereigniserkennungsmodul (202), das dazu ausgelegt ist, ein Leistungsereignis an dem elektrischen Leistungsversorgungssystem (400) aus den Leistungsversorgungsnetzwerkdaten zu erkennen, wobei das Leistungsereignis ein momentanes Ereignis umfasst, das an dem elektrischen Leistungsversorgungssystem (400) auftritt;
- ein Ursachenbestimmungsmodul (203), das dazu ausgelegt ist, eine Ursache des Leistungsereignisses basierend auf den Leistungsversorgungsnetzwerkdaten zu bestimmen, wobei die Ursache des Leistungsereignisses eines von einer Lastschwankung und einem Auftreten eines Fehlers in dem elektrischen Leistungsversorgungssystem (400) umfasst, wobei das Ursachenbestimmungsmodul (203) Module (203A, 203B und 203C) umfasst, die dazu ausgelegt sind, eine Leistungsversorgungsnetzwerkdatenanalyselogik einzusetzen, wobei die Module (203A, 203B und 203C) des Ursachenbestimmungsmoduls (203) ein Artbestimmungsmodul (203A), das dazu ausgelegt ist, eine Art des Leistungsereignisses basierend auf Leistungsqualitätsdaten und Schutzvorrichtungsdaten zu bestimmen, die aus den Leistungsversorgungsnetzwerkdaten erlangt werden, wobei die Art des Leistungsereignisses eines oder mehrere von einer Fehleranzeige in dem elektrischen Leistungsversorgungssystem (400) und einer Abweichung in der Qualität der elektrischen Leistung umfasst, die in dem elektrischen Leistungsversorgungssystem (400) befördert wird, ein Standortidentifizierungsmodul (203B), das dazu ausgelegt ist, einen Standort des Leistungsereignisses basierend auf den Leistungsqualitätsdaten zu identifizieren, und ein Ereignisanalysemodul (203C) umfassen, das dazu ausgelegt ist, das Leistungsereignis basierend auf einem oder mehreren von den Leistungsversorgungsnetzwerkdaten, der Art des Leistungsereignisses und dem Standort des Leistungsereignisses zu analysieren; und
- ein Empfehlungserstellungsmodul (204), das dazu ausgelegt ist, eine Empfehlung, die mit dem Leistungsereignis assoziiert ist, für das elektrische Leistungsversorgungssystem (400) basierend auf der Ursache des Leistungsereignisses zu erstellen, wobei die Empfehlung eine oder mehrere von einer Gesundheitsstatusanzeige eines oder mehrerer Teile des elektrischen Leistungsversorgungssystems (400), einer Ersetzungsanzeige eines oder mehrerer Teile des elektrischen Leistungsversorgungssystems (400) und einer Kalibrierungsanzeige eines oder mehrerer Teile des elektrischen Leistungsversorgungssystems (400) umfasst;
**dadurch gekennzeichnet, dass**:
- das Standortidentifizierungsmodul (203B) dazu ausgelegt ist, zu identifizieren, ob der Standort des Leistungsereignisses ein lastseitiges Leistungsereignis oder ein quellenseitiges Leistungsereignis ist.

10. Leistungsnetzwerkanalysesystem (201) nach Anspruch 9, wobei das Standortidentifizierungsmodul (203B) dazu ausgelegt ist, den Standort des Leistungsereignisses durch Extrahieren von Spannungswerten aus den Leistungsqualitätsdaten, die mit dem Zeitpunkt des Auftretens des Leistungsereignisses assoziiert sind, Extrahieren von Stromwerten aus den Leistungsqualitätsdaten, die mit dem Zeitpunkt des Auftretens des Leistungsereignisses assoziiert sind, und Verifizieren zu identifizieren, ob die Spannungswerte und die Stromwerte gleichzeitig zum gleichen Zeitpunkt ansteigen oder abfallen, wodurch angezeigt wird, dass der Standort des Leistungsereignisses ein quellenseitiges Leistungsereignis ist, oder dass der Standort des Leistungsereignisses ein lastseitiges Leistungsereignis ist, falls die Spannungswerte und die Stromwerte nicht gleichzeitig zum gleichen Zeitpunkt ansteigen oder abfallen.

11. Computerprogrammprodukt, umfassend ein nichtflüchtiges computerlesbares Speichermedium (302), wobei das nichtflüchtige computerlesbare Speichermedium (302) Computerprogrammcodes speichert, die Anweisungen umfassen, die durch mindestens einen Prozessor (301) ausführbar sind, wobei die Computerprogrammcodes Folgendes umfassen:
- einen ersten Computerprogrammcode zum Erlangen von Leistungsversorgungsnetzwerkdaten, die einen oder mehrere Parameter elektrischer Leistung darstellen, die auf dem elektrischen Leistungsversorgungssystem (400) befördert wird, wobei die Leistungsversorgungsnetzwerkdaten Leistungsqualitätsdaten, wobei Leistungsqualitätsdaten Daten sind, die durch Leistungsqualitätsvorrichtungen in dem elektrischen Leistungsversorgungssystem (400) gemessen werden, Schutzvorrichtungsdaten, die mit mehreren Schutzvorrichtungen in dem elektrischen Leistungsversorgungssystem assoziiert sind, wobei Schutzvorrichtungsdaten Konfigurationsdaten sind, die mit den Schutzvorrichtungen assoziiert sind, Leistungsereignisdaten, wobei Leistungsereignisdaten Daten sind, die mit dem Leistungsereignis assoziiert sind, und Topologiedaten umfassen, wobei Topologiedaten Daten sind, die mit einer oder mehreren Unterstationen in dem elektrischen Leistungsversorgungssystem assoziiert sind, wobei die Topologiedaten Details der elektrischen Komponenten umfassen, wobei die elektrischen Komponenten mindestens eines von Leistungsleitungen, Bussen, Schutzschaltern, Schaltern, Relais, Transformatoren sowie Lasten wie Motoren, Antrieben, Kondensatoren und Schalttafeln umfassen, die es ermöglichen, Lastschwankungen des elektrischen Leistungsversorgungssystems zu überwachen, und wobei die Leistungsversorgungsnetzwerkdaten eines oder mehrere von Messdaten und berechneten Daten sind und wobei die Leistungsversorgungsnetzwerkdaten Messdaten umfassen;
- einen zweiten Computerprogrammcode zum Erkennen eines Leistungsereignisses an dem elektrischen Leistungsversorgungssystem (400) aus den Leistungsversorgungsnetzwerkdaten, wobei das Leistungsereignis ein momentanes Ereignis umfasst, das an dem elektrischen Leistungsversorgungssystem (400) auftritt;
- einen dritten Computerprogrammcode zum Bestimmen einer Ursache des Leistungsereignisses basierend auf den Leistungsversorgungsnetzwerkdaten, wobei die Ursache des Leistungsereignisses eines oder mehrere von einer Lastschwankung und einem Auftreten eines Fehlers in dem elektrischen Leistungsversorgungssystem (400) umfasst, wobei der dritte Computerprogrammcode Computerprogrammcodes zum Einsetzen einer Leistungsversorgungsnetzwerkdatenanalyselogik umfasst; und
- einen vierten Computerprogrammcode zum Erstellen einer Empfehlung, die mit dem Leistungsereignis assoziiert ist, für das elektrische Leistungsversorgungssystem (400) basierend auf der Ursache des Leistungsereignisses, wobei die Empfehlung eine oder mehrere von einer Gesundheitsstatusanzeige eines oder mehrerer Teile des elektrischen Leistungsversorgungssystems (400), einer Ersetzungsanzeige eines oder mehrerer Teile des elektrischen Leistungsversorgungssystems (400) und einer Kalibrierungsanzeige eines oder mehrerer Teile des elektrischen Leistungsversorgungssystems (400) umfasst;
wobei die Computerprogrammcodes des dritten Computerprogrammcodes einen fünften Computerprogrammcode zum Bestimmen einer Art des Leistungsereignisses basierend auf Leistungsqualitätsdaten und Schutzvorrichtungsdaten, die aus den Leistungsversorgungsnetzwerkdaten erlangt werden, wobei die Art des Leistungsereignisses eines oder mehrere von einer Fehleranzeige in dem elektrischen Leistungsversorgungssystem (400) und einer Abweichung in der Qualität der elektrischen Leistung umfasst, die in dem elektrischen Leistungsversorgungssystem (400) befördert wird, einen sechsten Computerprogrammcode zum Identifizieren eines Standorts des Leistungsereignisses basierend auf den Leistungsqualitätsdaten und einen siebten Computerprogrammcode zum Analysieren des Leistungsereignisses basierend auf einem oder mehreren von den Leistungsversorgungsnetzwerkdaten, der Art des Leistungsereignisses und dem Standort des Leistungsereignisses umfassen,
**dadurch gekennzeichnet, dass**:
- der sechste Computerprogrammcode den Standort des Leistungsereignisses als ein lastseitiges Leistungsereignis oder ein quellenseitiges Leistungsereignis identifiziert.

## Revendications

1. Procédé (100) d'analyse de données de réseau électrique d'un système d'alimentation électrique (400), où les données de réseau électrique comprennent des données de qualité de l'alimentation, les données de qualité de l'alimentation étant des données mesurées par des dispositifs de qualité de l'alimentation dans le système d'alimentation électrique, des données de dispositif de protection associées à une pluralité de dispositifs de protection (402, 403) dans le système d'alimentation électrique (400), les données de dispositifs de protection étant des données de configuration associées aux dispositifs de protection, des données d'événements d'alimentation, les données d'événements d'alimentation étant des données associées à un événement électrique, et des données de topologie, les données de topologie étant des données associées à une ou plusieurs sous-stations dans le système d'alimentation électrique et les données de topologie comprenant des détails des composants électriques, les composants électriques comprenant au moins l'un des éléments suivants : des lignes d'alimentation électrique, des bus, des disjoncteurs, des commutateurs, des relais, des transformateurs, ainsi que des charges telles que des moteurs, des entraînements, des condensateurs, des tableaux de distribution, qui permettent de surveiller la variation de charge du système d'alimentation électrique, et où les données de réseau d'alimentation électrique comprennent des données mesurées, le procédé comprenant les étapes suivantes :
- obtenir les données de réseau électrique représentant un ou plusieurs paramètres de l'énergie électrique transportée sur le système d'alimentation électrique (400) ;
- détecter l'événement électrique sur le système d'alimentation électrique (400) à partir des données du réseau électrique, l'événement électrique comprenant un événement momentané se produisant sur le système d'alimentation électrique (400) ;
- déterminer une cause de l'événement électrique sur la base des données du réseau électrique en utilisant une logique d'analyse des données du réseau électrique, où la logique d'analyse des données du réseau électrique comprend de déterminer un type d'événement électrique sur la base des données de qualité de l'alimentation électrique et des données du dispositif de protection obtenues à partir des données du réseau électrique, où la logique d'analyse des données du réseau électrique comprend en outre d'identifier un emplacement de l'événement électrique sur la base des données de qualité de l'alimentation électrique et comprend d'analyser l'événement électrique sur la base d'un ou plusieurs paramètres parmi les données du réseau électrique, le type de l'événement électrique et l'emplacement de l'événement électrique ; et
- générer une recommandation associée à l'événement électrique pour le système d'alimentation électrique (400) sur la base de la cause de l'événement électrique ;
**caractérisé en ce que** :
- l'identification de l'emplacement de l'événement électrique comprend d'identifier si l'emplacement de l'événement électrique se trouve du côté de la charge ou du côté de la source.

2. Procédé (100) selon la revendication 1, dans lequel l'identification de l'emplacement de l'événement électrique comprend d'extraire des valeurs de tension à partir des données de qualité de l'alimentation électrique associées au moment de l'occurrence de l'événement électrique, d'extraire des valeurs de courant à partir des données de qualité de l'alimentation électrique associées au moment de l'occurrence de l'événement électrique et de vérifier si les valeurs de tension et les valeurs de courant augmentent ou diminuent simultanément au même instant, indiquant ainsi que l'emplacement de l'événement électrique est un événement électrique côté source, ou que l'emplacement de l'événement électrique est un événement électrique côté charge si les valeurs de tension et les valeurs de courant n'augmentent pas ou ne diminuent pas simultanément au même instant.

3. Procédé selon la revendication 1 ou 2, dans lequel les données de qualité de l'alimentation électrique et les données du dispositif de protection sont extraites pour une fenêtre temporelle prédéfinie autour du moment de l'occurrence de l'événement électrique.

4. Procédé (100) selon l'une quelconque des revendications 1 à 3, dans lequel la cause de l'événement électrique comprend une ou plusieurs causes parmi une variation de charge et l'occurrence de défauts dans le système d'alimentation électrique (400).

5. Procédé (100) selon l'une quelconque des revendications 1 à 4, dans lequel la détermination d'un type d'événement électrique comprend de déterminer si une aberration de la qualité de l'alimentation électrique est observée et/ou si une indication de défaut par l'intermédiaire du déclenchement d'un dispositif de protection a été observée dans le système d'alimentation électrique correspondant à l'événement électrique détecté.

6. Procédé (100) selon l'une quelconque des revendications 1 à 5, dans lequel le type de l'événement électrique comprend un ou plusieurs types parmi une indication de défaut dans le système d'alimentation électrique (400) et une aberration dans la qualité de l'alimentation électrique transportée dans le système d'alimentation électrique (400).

7. Procédé (100) selon l'une quelconque des revendications 1 à 6, dans lequel la logique d'analyse des données du réseau électrique comprend d'extraire des données de topologie des données du réseau électrique et dans lequel les données de topologie et les données de qualité d'alimentation électrique sont analysées conjointement avec l'emplacement de l'événement électrique afin de déterminer si la cause de l'événement électrique est une variation de charge ou une occurrence réelle de défaut.

8. Procédé (100) selon l'une quelconque des revendications 1 à 7, dans lequel la recommandation comprend une ou plusieurs indications parmi une indication d'état d'une ou plusieurs parties du système d'alimentation électrique (400), une indication de remplacement d'une ou plusieurs parties du système d'alimentation électrique (400) et une indication d'étalonnage d'une ou plusieurs parties du système d'alimentation électrique (400).

9. Système d'analyse de données de réseau électrique (200) destiné à analyser des données de réseau électrique d'un système d'alimentation électrique (400), le système d'analyse de données de réseau électrique (200) comprenant :
un support de stockage non transitoire lisible par ordinateur (302) stockant des instructions de programme informatique définies par des modules (201, 202, 203 et 204) du système d'analyse de données de réseau électrique (200) ;
au moins un processeur (301) couplé de manière communicative au support de stockage non transitoire lisible par ordinateur (302), l'au moins un processeur (301) exécutant les instructions de programme informatique définies ; et
les modules (201, 202, 203 et 204) du système d'analyse de données de réseau électrique (200) comprenant :
- un module d'obtention de données (201) configuré pour obtenir les données du réseau électrique représentant un ou plusieurs paramètres de l'énergie électrique transportée sur le système d'alimentation électrique (400), où les données du réseau électrique comprennent des données de qualité de l'alimentation, les données de qualité de l'alimentation étant des données mesurées par des dispositifs de qualité de l'alimentation électrique dans le système d'alimentation électrique, des données de dispositifs de protection associées à une pluralité de dispositifs de protection dans le système d'alimentation électrique (400), où les données de dispositif de protection sont des données de configuration associées aux dispositifs de protection, des données d'événement électrique, où les données d'événement électrique sont des données associées à l'événement électrique, et des données de topologie, où les données de topologie sont des données associées à une ou plusieurs sous-stations dans le système d'alimentation électrique, où les données de topologie comprennent des détails des composants électriques, où les composants électriques comprennent au moins l'un des éléments suivants : des lignes d'alimentation électrique, des bus, des disjoncteurs, des commutateurs, des relais, des transformateurs, ainsi que des charges telles que des moteurs, des entraînements, des condensateurs, des tableaux de distribution, qui permettent de surveiller la variation de charge du système d'alimentation électrique, et où les données de réseau électrique comprennent des données mesurées ;
- un module de détection d'événement (202) configuré pour détecter un événement électrique sur le système d'alimentation électrique (400) à partir des données du réseau électrique, l'événement électrique comprenant un événement momentané se produisant sur le système d'alimentation électrique (400) ;
- un module de détermination de cause (203) configuré pour déterminer une cause de l'événement électrique sur la base des données du réseau électrique, où la cause de l'événement électrique comprend une ou plusieurs causes parmi une variation de charge et une occurrence de défaut dans le système d'alimentation électrique (400), où le module de détermination de cause (203) comprend des modules (203A, 203B et 203C) configurés pour utiliser une logique d'analyse des données du réseau électrique, où les modules (203A, 203B et 203C) du module de détermination de cause (203) comprennent un module de détermination de type (203A) configuré pour déterminer un type de l'événement électrique sur la base de données de qualité de l'alimentation électrique et de données de dispositif de protection obtenues à partir des données du réseau électrique, où le type d'événement électrique comprend un ou plusieurs éléments parmi une indication de défaut dans le système d'alimentation électrique (400) et une anomalie dans la qualité de l'alimentation électrique transportée dans le système d'alimentation électrique (400), un module d'identification d'emplacement (203B) configuré pour identifier un emplacement de l'événement électrique sur la base des données de qualité de l'alimentation électrique, et un module d'analyse d'événement (203C) configuré pour analyser l'événement électrique sur la base d'un ou plusieurs éléments parmi les suivants : des données du réseau d'alimentation électrique, le type d'événement électrique et l'emplacement de l'événement électrique ; et
- un module de génération de recommandation (204) configuré pour générer une recommandation associée à l'événement électrique pour le système d'alimentation électrique (400) sur la base de la cause de l'événement électrique, la recommandation comprenant une ou plusieurs indications de l'état de santé d'une ou plusieurs parties du système d'alimentation électrique (400), une indication de remplacement d'une ou plusieurs parties du système d'alimentation électrique (400) et une indication d'étalonnage d'une ou plusieurs parties du système d'alimentation électrique (400) ;
**caractérisé en ce que** :
- le module d'identification d'emplacement (203B) est configuré pour identifier si l'emplacement de l'événement électrique est un événement électrique côté charge ou un événement électrique côté source.

10. Système d'analyse de données de réseau électrique (201) selon la revendication 9, dans lequel le module d'identification d'emplacement (203B) est configuré pour identifier l'emplacement de l'événement électrique en extrayant des valeurs de tension des données de qualité de l'alimentation électrique associées au moment de l'occurrence de l'événement électrique, extraire des valeurs de courant à partir des données de qualité de l'alimentation électrique associées au moment de l'occurrence de l'événement électrique et vérifier si les valeurs de tension et les valeurs de courant augmentent ou diminuent simultanément au même instant, indiquant ainsi que l'emplacement de l'événement électrique est un événement électrique côté source, ou que l'emplacement de l'événement électrique est un événement électrique côté charge si les valeurs de tension et les valeurs de courant n'augmentent pas ou ne diminuent pas simultanément au même instant.

11. Produit logiciel comprenant un support de stockage non transitoire lisible par ordinateur (302), le support de stockage non transitoire lisible par ordinateur (302) stockant des codes de programme informatique qui comprennent des instructions exécutables par au moins un processeur (301), les codes de programme informatique comprenant :
- un premier code de programme informatique pour obtenir des données de réseau électrique représentant un ou plusieurs paramètres de l'énergie électrique transportée sur le système d'alimentation électrique (400), où les données du réseau électrique comprennent des données de qualité de l'alimentation, les données de qualité de l'alimentation étant des données mesurées par des dispositifs de qualité de l'alimentation électrique dans le système d'alimentation électrique, des données de dispositifs de protection associées à une pluralité de dispositifs de protection dans le système d'alimentation électrique (400), où les données de dispositif de protection sont des données de configuration associées aux dispositifs de protection, des données d'événement électrique, où les données d'événement électrique sont des données associées à l'événement électrique, et des données de topologie, où les données de topologie sont des données associées à une ou plusieurs sous-stations dans le système d'alimentation électrique, où les données de topologie comprennent des détails des composants électriques, où les composants électriques comprennent au moins l'un des éléments suivants : des lignes d'alimentation électrique, des bus, des disjoncteurs, des commutateurs, des relais, des transformateurs, ainsi que des charges telles que des moteurs, des entraînements, des condensateurs, des tableaux de distribution, qui permettent de surveiller la variation de charge du système d'alimentation électrique, et où les données de réseau électrique sont une ou plusieurs données parmi des données mesurées et des données calculées, et où les données de réseau électrique comprennent des données mesurées ;
- un deuxième code de programme informatique pour détecter un événement électrique sur le système d'alimentation électrique (400) à partir des données du réseau électrique, où l'événement électrique comprend un événement momentané se produisant sur le système d'alimentation électrique (400) ;
- un troisième code de programme informatique pour déterminer la cause de l'événement électrique sur la base des données du réseau électrique, où la cause de l'événement électrique comprend une ou plusieurs causes parmi une variation de charge et une occurrence de défaut dans le système d'alimentation électrique (400), le troisième code de programme informatique comprenant des codes de programme informatique pour utiliser une logique d'analyse des données du réseau électrique ; et
- un quatrième code de programme informatique pour générer une recommandation associée à l'événement électrique pour le système d'alimentation électrique (400) sur la base de la cause de l'événement électrique, la recommandation comprenant une ou plusieurs indications de l'état de santé d'une ou plusieurs parties du système d'alimentation électrique (400), une indication de remplacement d'une ou plusieurs parties du système d'alimentation électrique (400) et une indication d'étalonnage d'une ou plusieurs parties du système d'alimentation électrique (400) ;
où les codes de programme informatique du troisième code de programme informatique comprennent un cinquième code de programme informatique pour déterminer un type d'événement électrique sur la base de données de qualité de l'alimentation électrique et de données de dispositif de protection obtenues à partir des données de réseau électrique, où le type d'événement électrique comprend un ou plusieurs type parmi une indication de défaut dans le système d'alimentation électrique (400) et une aberration dans la qualité de l'alimentation électrique transportée dans le système d'alimentation électrique (400), un sixième code de programme informatique pour identifier un emplacement de l'événement électrique sur la base des données de qualité de l'alimentation électrique, et un septième code de programme informatique pour analyser l'événement électrique sur la base d'un ou plusieurs éléments parmi des données du réseau électrique, le type de l'événement électrique et l'emplacement de l'événement électrique
**caractérisé en ce que** :
- le sixième code de programme informatique identifie l'emplacement de l'événement électrique comme un événement électrique côté charge ou un événement électrique côté source.
